# EUROPEAN PATENT APPLICATION

(11) **EP 4 708 104 A1**
(43) Date of publication of application: **11.03.2026**
(21) Application number: 25199047.9
(22) Date of filing: 29.08.2025
(51) Int. Cl.: G06F 21/64, H04L 9/32, H04L 9/00

(54) **SOURCE VERIFICATION SYSTEM**

(30) Priority: 05.09.2024 US 202463691016 P; 21.08.2025 US 202519306510
(71) Applicant: VBrick Systems, Inc., Herndon, VA 20170 (US)
(72) Inventor: JEYES, David, Herndon, 20170 (US); JINDAL, Rajat, Herndon, 20170 (US); LOHIYA, Shailesh, Herndon, 20170 (US); SPARTA, Paul, Herndon, 20170 (US)
(74) Representative: Kransell & Wennborg KB

(57) **Abstract**

Publishers can securely register media content (e.g. video, audio, image etc.) by verifying their identity, for example, through a blockchain wallet or other verification mechanism, providing media metadata, and generating a unique fingerprint and hash of the media. The unique fingerprint hash, along with basic metadata such as the URL location or a unique identifier of the media, is stored on the blockchain to link the media to its publisher.

## Description

### Technical Field

The present disclosure relates to information authentication, and more specifically to a system and method for verifying media content.

### Introduction

As AI-generated content, avatars, and deepfakes become increasingly common, ensuring the authenticity of media such as videos, audio files, and images is crucial. Verifying that media content originates from a trusted publisher is essential for maintaining information integrity. Traditional methods of media verification can be vulnerable to manipulation or fraud. Blockchain technology, known for its security and transparency, offers a robust solution to authenticate and verify media content by creating a secure and immutable record of media registration and verification. Embodiments of the invention described herein leverage blockchain technology to provide a secure and transparent system for registering and verifying media content.

Blockchain is a shared and distributed ledger that may facilitate the process of recording and verifying the source of information. The information may pertain to something tangible (e.g., a house, a car, and so on, and media content, such as images or videos, etc.). The information may also pertain to something intangible like intellectual property (IP), such as patents, copyrights, or branding. For example, a blockchain-based **IP** system may facilitate verifying that content was published by the indicated source.

Systems, methods, and computer-readable storage media configured according to this disclosure are capable registering media content, for example, for authenticity. By using blockchain to register the media content, access to information that is authentic and whose "chain of title" is irrefutable, can be decentralized. The underlying ledger (blockchain) is tamper-evident. No parties can tamper with a transaction after it's been recorded to the ledger. If a transaction is changed, a new transaction must be used to reverse the change, and both transactions are then visible. A single and shared ledger can provide one place to go to determine the ownership and status of the product without disputes.

Systems, methods, and computer-readable storage media configured according to this disclosure are capable of protecting, analyzing, and evaluating the source of information, for example media content such as videos, images, and the like. The systems, methods, and computer-readable storage media described herein may also be applicable to any type of information or transaction.

### Summary

Embodiments of the invention introduce a comprehensive system for authenticating media content through blockchain technology. It includes methods for registering media content on the blockchain, verifying its authenticity, and a software development kit (SDK) designed to facilitate the integration of these processes into third-party systems.
1. Content Registration on the Blockchain: Publishers can securely register media content (e.g. video, audio, image etc.) by verifying their identity, for example, through a blockchain wallet or other verification mechanism, providing media metadata, and generating a unique fingerprint and hash of the media. The unique fingerprint hash, along with basic metadata such as the URL location or a unique identifier of the media, is stored on the blockchain to link the media to its publisher.
2. Verification of Media Source: When media is accessed, the system generates a unique fingerprint and its hash and compares it with the hash stored on the blockchain. It also compares and verifies the source URL or the identifier of the media. Verification results are displayed to the viewer, indicating whether the media and the publisher are verified.
3. SDK for Registration and Verification: An SDK is provided to enable third-party publishers to integrate the media registration and verification process into their systems, facilitating ease of use and widespread adoption.

### Brief Description of Drawings

Fig. 1 is a flowchart of a method according to embodiments of the invention;
Fig. 2 is an overview of a blockchain according to embodiments of the invention;

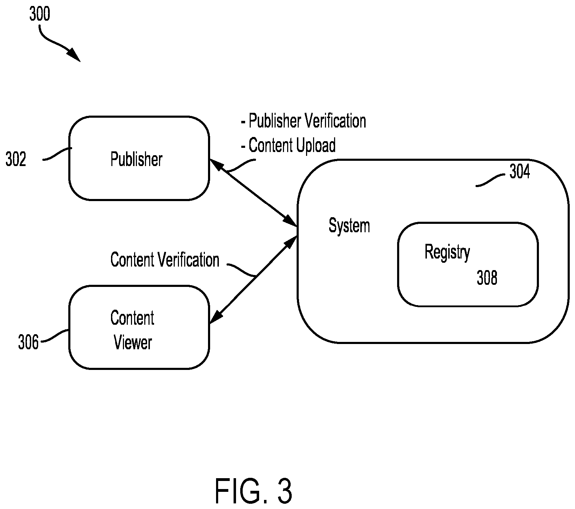

Fig. 3 is an overview of a system according to embodiments of the invention;
Fig. 4 is a diagram of a computer system for implementing embodiments of the invention.

### Detailed Description

The content registration process begins with publisher verification. Publishers must prove their identity, for example using secure blockchain wallet keys. Each publisher creates its own public-private pair or is assigned a unique public-private key pair upon registration with the blockchain network. Verification is achieved when the publisher signs a challenge message with their private key, which is then validated using the corresponding public key. For example, Publishers provide their wallet address. The system sends a challenge message to the publisher's wallet, which must be signed by the publisher's private key. This proves ownership of the wallet and verifies the publisher's identity.

Alternative methods for verification may include additional credentials, such as digital certificates or third-party verification services.

Once the publisher is verified, they submit media metadata through a user interface or API provided by the system. This metadata includes details such as the media title, a unique identifier (ID), description, and the media source URL. The system checks to ensure the metadata is complete and properly formatted, verifying the accessibility of the URL and the uniqueness of the ID.

Following metadata submission, the system generates a unique fingerprint of the media content. This fingerprint can be based on the entire media file, which might be more accurate but also more computationally intensive, or specific segments, such as keyframes in a video. The system computes a hash of the fingerprint. For efficiency, the system can generate fingerprints for media segments or metadata, which are later combined or individually hashed. The fingerprint is then hashed using a cryptographic hash function, and this hash, along with the metadata such as media source URL and publisher information, is stored on the blockchain. The blockchain's immutable ledger ensures the information remains tamper-proof.

The system also maintains a digital registry that records publisher IDs, media metadata, fingerprint hashes, and their blockchain locations. This registry is updated with each new media registration, linking media hashes to their respective blockchain records. For example, the registry stores references to blockchain entries, such as transaction IDs or smart contract addresses, linking media hashes in the registry to their respective blockchain records.

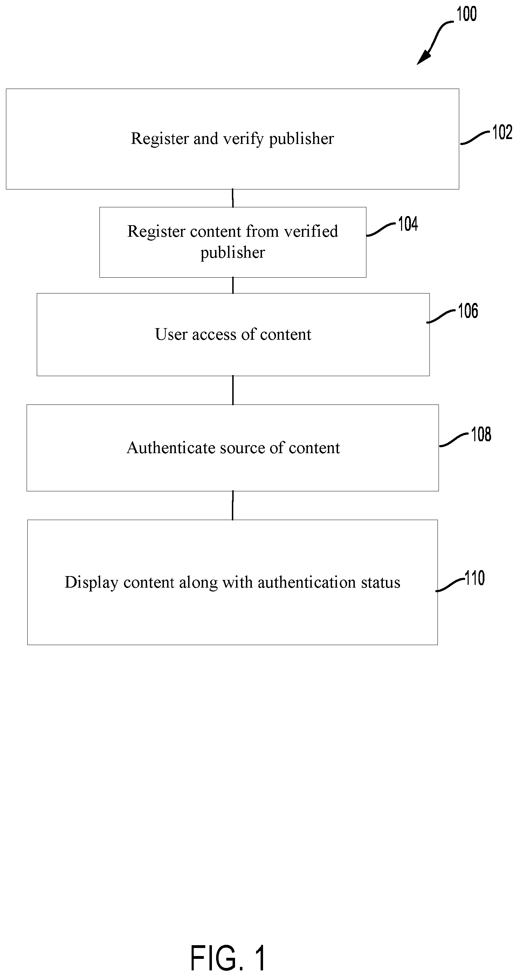

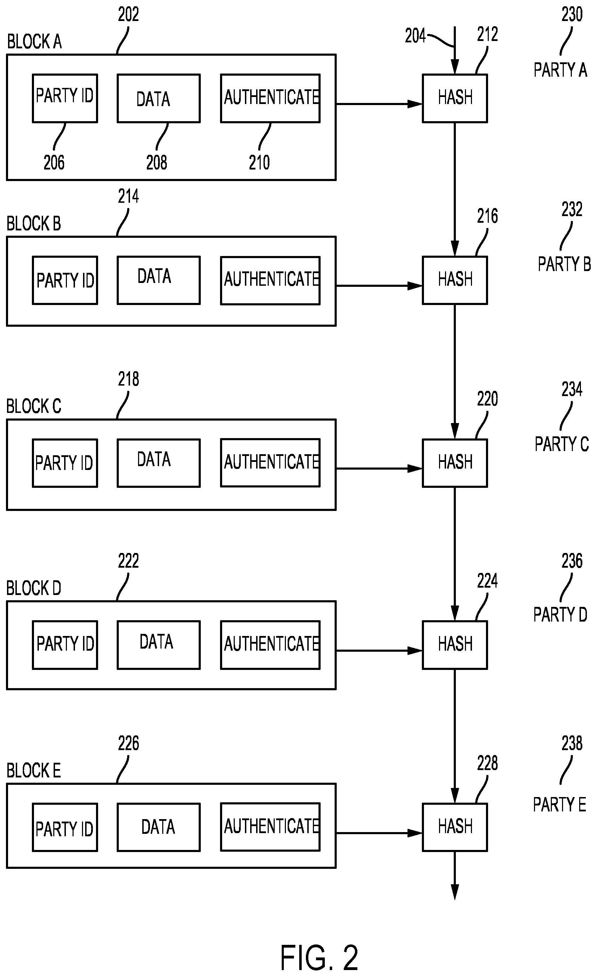

FIG. 2 illustrates an exemplary blockchain based on interactions between parties using the method 100 of FIG. 1. Each transaction recorded within the blockchain may be a block which can be hashed or otherwise encrypted. As new transactions are added to the blockchain, each new transaction's veracity can be tested against the previous blockchain stored by the devices. Each new transaction can, in some configurations, require confirmation from a defined percentage (usually 50%) of the devices to be added to the blockchain.

The blockchain can take the form illustrated in FIG. 2. In this example, there is a blockchain 204 which is distributed among the parties. The system may store the fingerprint hash in a block of the blockchain 204. In this example, a block (Block A 202) is generated to store the fingerprint hash and related data of publisher A 230. The block 202 added to the blockchain 204 may contains an ID 206 of publisher A 230, or an address or identification of a device that may be used by the party A 230, and the metadata 208. The blockchain may also take other forms, and/or include or omit other blocks and types of blocks.

In addition, block 202 can contain an authentication portion 210. The authentication portion 210 may set restrictions of different levels on the metadata 208 and the party ID 206. For example, the metadata 208 or the party ID 206 may be set not to be visible or accessible to other parties other than party A or the system. The authentication portion 210 may authorize other parties to view partial portion or details of the metadata 208 and the party ID, for example, the title of the media. In addition, the authentication portion 210 may authorize a full access to the metadata 208. As the device generates the block 202, the block 202 is hashed 212 into the previous blockchain 204, resulting in an updated blockchain. Data regarding other publishers or parties can be added to the same, of different parts of the blockchain.

The form of the distributed ledger can vary between configurations. For example, in some configurations, encryption or data security may be critical and therefore used to protect the data transmissions/storage. In other configurations, the need to verify the source of the data or the veracity of transactions may be paramount, in which case a blockchain can be part of the distributed ledger. Specifically, the blockchain can be used to contain new pieces of data/metadata in new blocks being added to an existing blockchain, and these new blocks can be created upon determining that certain predefined conditions have been met. The new block can then be transmitted/communicated to the other assets in the group for verification of the block's veracity. The other assets in the group of assets can verify the new block based on encryption, identifications, etc., included in the block. Upon verification, the new block can be added to the blockchain, and the updated distributed ledger (which includes the updated blockchain) can be distributed amongst the group.

To verify media content, the system begins when a viewer wants to access a media file, such as a video. The video is loaded into a video player. The video player may be a private system, or a publicly accessible one, such as YouTube. The media player or application generates or accesses the stored fingerprint hash for the loaded media. This hash is then compared to the hash stored on the blockchain. The system retrieves the appropriate fingerprint hash and publisher information from the blockchain registry and performs a comparison.

If the hashes and publisher information match, the media player displays an icon indicating successful verification. This icon may be accompanied by the publisher's name and other relevant details.

If there is a mismatch or the media cannot be found on the blockchain, a warning icon and note are shown, indicating that the publisher cannot be verified.

Embodiments of the invention also include a software development kit (SDK) to simplify the integration of registration and verification processes for third-party publishers. The SDK package, which includes libraries, documentation, and sample code, allows developers to incorporate the system's functionality into their platforms. The SDK provides APIs for submitting media details, generating fingerprints and hashes, validating hashes and media source, and confirming publisher identities. Functions for confirming the publisher's identity and integrating this process into the publisher's existing workflows may also be included.

The system's blockchain-based approach is versatile and can be adapted for various scenarios, including intellectual property rights management (verifying ownership and licensing of digital media), licensing transactions (tracking and verifying licensing agreements and transfers), and ownership verification (confirming the transfer of media ownership between entities and updating the blockchain registry accordingly). By offering a transparent and immutable record of media content and publisher information, the system enhances trust and accountability in media publishing and distribution.

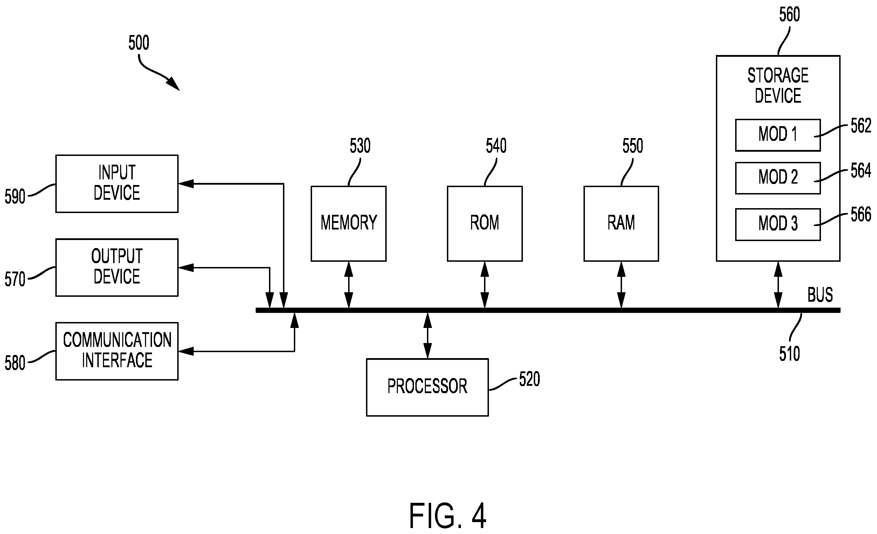

With reference to FIG. 4, an exemplary system 500 can include a processing unit (CPU or processor) 520 and a system bus 510 that couples various system components including the system memory 530 such as read only memory (ROM) 540 and random access memory (RAM) 550 to the processor 520. The system 500 can include a cache of high speed memory connected directly with, in close proximity to, or integrated as part of the processor 520. The system 500 copies data from the memory 530 and/or the storage device 560 to the cache for quick access by the processor 520. In this way, the cache provides a performance boost that avoids processor 520 delays while waiting for data. These and other modules can control or be configured to control the processor 520 to perform various actions. Other system memory 530 may be available for use as well. The memory 530 can include multiple different types of memory with different performance characteristics. It can be appreciated that the disclosure may operate on a computing system 500 with more than one processor 520 or on a group or cluster of computing devices networked together to provide greater processing capability. The processor 520 can include any general purpose processor and a hardware module or software module, such as module 1 562, module 2 564, and module 3 566 stored in storage device 560, configured to control the processor 520 as well as a special-purpose processor where software instructions are incorporated into the actual processor design. The processor 520 may essentially be a completely self-contained computing system, containing multiple cores or processors, a bus, memory controller, cache, etc. A multicore processor may be symmetric or asymmetric.

The system bus 510 may be any of several types of bus structures including a memory bus or memory controller, a peripheral bus, and a local bus using any of a variety of bus architectures. A basic input/output (BIOS) stored in ROM 540 or the like, may provide the basic routine that helps to transfer information between elements within the computing device 500, such as during start-up. The computing device 500 further includes storage devices 560 such as a hard disk drive, a magnetic disk drive, an optical disk drive, tape drive or the like. The storage device 560 can include software modules 562, 564, 566 for controlling the processor 520. Other hardware or software modules are contemplated. The storage device 560 is connected to the system bus 510 by a drive interface. The drives and the associated computer-readable storage media provide nonvolatile storage of computer-readable instructions, data structures, program modules and other data for the computing system 500. In one aspect, a hardware module that performs a particular function includes the software component stored in a tangible computer-readable storage medium in connection with the necessary hardware components, such as the processor 520, bus 510, output device 570 as display, and so forth, to carry out the function. In another aspect, the system can use a processor and computer-readable storage medium to store instructions which, when executed by the processor, cause the processor to perform a method or other specific actions. The basic components and appropriate variations are contemplated depending on the type of device, such as whether the system 500 is a small, handheld computing device, a desktop computer, or a computer server.

Although the exemplary embodiment described herein employs the hard disk as the storage device 560, other types of computer-readable media which can store data that are accessible by a computer, such as magnetic cassettes, flash memory cards, digital versatile disks, cartridges, random access memories (RAMs) 550, and read only memory (ROM) 540, may also be used in the exemplary operating environment. Tangible computer-readable storage media, computer-readable storage devices, or computer-readable memory devices, expressly exclude media such as transitory waves, energy, carrier signals, electromagnetic waves, and signals per se.

To enable user interaction with the computing system 500, an input device 590 represents any number of input mechanisms, such as a microphone for speech, a touch-sensitive screen for gesture or graphical input, keyboard, mouse, motion input, speech and so forth. An output device 570 can also be one or more of a number of output mechanisms known to those of skill in the art. **In** some instances, multimodal systems enable a user to provide multiple types of input to communicate with the computing system 500. The communications interface 580 generally governs and manages the user input and system output. There is no restriction on operating on any particular hardware arrangement and therefore the basic features here may easily be substituted for improved hardware or firmware arrangements as they are developed.

The concepts disclosed herein can also be used to improve the computing systems which are performing, or enabling the performance, of the disclosed concepts. For example, information associated with confidential information, smart contract, jointly developed technology, etc., can be generated by local computing devices. **In** a standard computing system, the information will then be forwarded to a central computing system from the local computing devices. However, systems configured according to this disclosure can improve upon this "centralized" approach.

One way in which systems configured as disclosed herein can improve upon the centralized approach is combining the data from the respective local computing devices prior to communicating the information from the local computing devices to the central computing system. Rather than transmitting each individual piece of data each time new data is generated, such as the jointly developed technology, the various computing devices can cache the generated data for a period of time and combine the generated data with any additional data which is generated within the period of time. This withholding and combining of data can conserve bandwidth due to the reduced number of transmissions, can save power due to the reduced number of transmissions, and can increase accuracy due to holding/verifying the data for a period of time prior to transmission. Another way in which systems configured as disclosed herein can improve upon the centralized approach is adapting a decentralized approach, where data is shared among all the individual nodes/computing devices of the network, and the individual computing devices perform calculations and determinations as required. Such a configuration may be more power and/or bandwidth intensive than a centralized approach, but can result in a more dynamic system because of the ability to modify assignments and requirements immediately upon making that determination. **In** addition, such a system can be more secure, because there are multiple points of failure (rather than a single point of failure in a centralized system).

It is worth noting that a "hybrid" system might be more suitable for some specific configurations. **In** this approach, a part of the network/system would be using the centralized approach (which can take advantage of the bandwidth savings described above), while the rest of the system is utilizing a de-centralized approach (which can take advantage of the flexibility/increased security described above).

### Further examples.

The system may further comprise:
responsive to comparing a media fingerprint of the media fingerprints with a blockchain-stored hash of the blockchain-stored hashes, presenting, by the system, a warning icon indicating that media content associated with the media fingerprint is not on the blockchain.

The blockchain may comprise a plurality of transaction blocks, each of the transaction blocks storing a fingerprint hash for a loaded instance of media content.

The one of the transaction blocks may include one or more of:
an identifier of a publisher;
an address of a device; and
an instance of metadata.

The one of the transaction blocks may further include an authentication portion configured to set one or more restrictions on the metadata and the identifier of a publisher.

The one or more instructions may include one or more restriction levels.

The various embodiments described above are provided by way of illustration only and should not be construed to limit the scope of the disclosure. Various modifications and changes may be made to the principles described herein without following the example embodiments and applications illustrated and described herein, and without departing from the spirit and scope of the disclosure.

## Claims

1. A method for verifying an authenticity of media content using blockchain technology, comprising:
verifying an identity of a publisher;
registering media content on a blockchain by storing unique fingerprint hash of the media along with publisher information;
verifying the media content by comparing a fingerprint hash generated from the media with the hash stored on the blockchain; and
displaying verification results to a viewer.

2. The method of claim 1, wherein the fingerprint is generated from at least one of the media content or media metadata.

3. The method of claim 1, further including providing a software development kit (SDK) for integrating media registration and verification into third-party systems.

4. A system for media content authentication, comprising:
one or more computer-readable memory devices storing one or more instructions of the media content authentication;
one or more processors to execute the one or more instructions;
a publisher verification module;
a media registration module for storing media fingerprints and hashes on a blockchain;
a content verification module for comparing media fingerprints with blockchain-stored hashes; and
a user interface for displaying verification results.

5. The system of claim 4, further comprising a software development kit (SDK) for integrating media registration and verification into third-party systems.

6. The system of claim 5, wherein the SDK includes functions for submitting media details, retrieving fingerprints, and validating publisher identity.

7. The system of claim 5, wherein the SDK includes one or more APIs for performing one or more functions.

8. The system of claim 7, wherein the one or more functions is selected from:
a first function for submitting media details;
a second function for generating fingerprints and hashes;
a third function for validating hashes and media source; and
a fourth function for confirming publisher identities.

9. The system of claim 4, wherein the media registration module is for further storing one or more references to blockchain entries, wherein each of the blockchain entries is configured to link one of the hashes to a respective blockchain record on the blockchain.

10. The system of claim 4, wherein the publisher verification module is for validating a signature provided by a publisher using a private key of the publisher.

11. The system of claim 10, wherein the signature is a signature of a challenge message sent to a wallet of the publisher.

12. The system of claim 4, wherein one or more of a URL location and a unique identifier of the media is further stored on the blockchain.

13. The system of claim 4, further comprising:
retrieving, by the system, a fingerprint hash and an item of publisher information prior to comparing the media fingerprints with the blockchain-stored hashes.

14. The system of claim 4, further comprising:
generating, by the system, a unique fingerprint of media content subsequent to submitting metadata via an API associated with the media content.

15. The system of claim 4, wherein the verification results are displayed by a user interface of a content viewer.
